(19) **Europäisches Patentamt**
**European Patent Office**
**Office européen des brevets**

(11) **EP 3 147 313 A1**

(12) **EUROPEAN PATENT APPLICATION**
published in accordance with Art. 153(4) EPC

(43) Date of publication:
**29.03.2017 Bulletin 2017/13**

(51) Int Cl.:
*C08J 5/18* (2006.01)    *B32B 27/36* (2006.01)

(21) Application number: **15796587.2**

(22) Date of filing: **19.05.2015**

(86) International application number:
**PCT/JP2015/064366**

(87) International publication number:
**WO 2015/178390 (26.11.2015 Gazette 2015/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.05.2014 JP 2014105703**

(71) Applicant: **Toyobo Co., Ltd.**
**Osaka-shi**
**Osaka 530-8230 (JP)**

(72) Inventors:
• **GOTO, Takamichi**
**Inuyama-shi**
**Aichi 484-8508 (JP)**

• **NAKAYA, Tadashi**
**Inuyama-shi**
**Aichi 484-8508 (JP)**
• **IKEHATA, Yoshitomo**
**Inuyama-shi**
**Aichi 484-8508 (JP)**
• **YAMADA, Kouji**
**Inuyama-shi**
**Aichi 484-8508 (JP)**
• **FUNAKI, Kenichi**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY STRETCHED POLYBUTYLENE TEREPHTHALATE FILM, MANUFACTURING METHOD THEREFOR, AND GAS BARRIER LAMINATE FILM**

(57)    It is provided that a biaxially stretched polybutylene terephthalate film which has all of excellent thickness precision, excellent pin-hole resistance and excellent bag rupture resistance and can achieve excellent barrier properties when a gas barrier layer is provided thereon, and manufacturing method therefor. A biaxially stretched polybutylene terephthalate film, wherein the biaxially stretched polybutylene terephthalate film containing not less than 90% by mass of polybutylene terephthalate, and the plane center average roughness of a 500-nm square region that does not contain a protrusion resulting from inert particles in at least one surface of the film is not more than 1.0 nm.

**EP 3 147 313 A1**

**Description**

TECHNICAL FIELD

The present invention relates to: a biaxially stretched polybutylene terephthalate film which has excellent moisture resistance, pin-hole resistance and bag rupture resistance, and can be used suitably particularly for retort pouch packaging and wet food packaging; and a gas barrier laminate film which comprises the biaxially stretched polybutylene terephthalate film and a gas barrier layer provided on the biaxially stretched polybutylene terephthalate film and is suitable for food packaging for which a high level of barrier properties are required.

BACKGROUND ART

Polybutylene terephthalate (referred to as "PBT", hereinbelow) has been used conventionally as an engineering plastic because of its excellent mechanical properties and impact resistance as well as its excellent gas barrier properties and chemical resistance, and has been used as a useful material particularly because of its high crystallization rate and good productivity. Furthermore, with taking advantage of these properties, it has been examined on the application of PBT in the field of films such as converting films, food-packaging films and draw molding films.

In recent years, a film manufactured by biaxially stretching PBT has been studied in order to bring out inherent properties of PBT from the viewpoint of mechanical properties and impact resistance. With respect to a food packaging film, it has been attempted to impart gas barrier properties to a biaxially stretched PBT film from the viewpoint of the protection of a food inside the film and the extension of a storage period for a food inside the film.

For example, Patent Document 1 discloses a gas barrier biaxially stretched polybutylene terephthalate film which is composed of a simultaneously biaxially stretched polybutylene terephthalate film and a coating layer having oxygen barrier properties and coated on at least one surface of the simultaneously biaxially stretched polybutylene terephthalate film. The gas barrier biaxially stretched polybutylene terephthalate film is characterized in that the tensile strength at break of the gas barrier biaxially stretched polybutylene terephthalate film is not less than 200 MPa and the tensile elongation at break of the film is not less than 50% and not more than 150% as determined in all of four directions (0° (MD), 45°, 90° (TD), 135°). According to this technique, it becomes possible to manufacture a simultaneously biaxially stretched PBT film having less anisotropy and having excellent gas barrier properties, mechanical properties and dimensional stability.

However, the barrier property (OTR) of a film manufactured by this technique is 3.6 to 7.2. Therefore, there is still plenty of room for improving in the technique.

Patent Document 2 discloses that a simultaneously biaxially stretched PBT film having less anisotropy and having excellent gas barrier properties, mechanical properties and dimensional stability can be manufactured stably by coating at least one surface of a simultaneously biaxially stretched polybutylene terephthalate film with a coating layer having oxygen barrier properties and by adjusting the tensile strength at break of the resultant film to not less than 200 MPa and the tensile elongation at break of the film to not less than 50% and not more than 150% as determined in all of four directions (0° (MD), 45°, 90° (TD), 135°).

Patent Document 3 discloses that a packaging material for liquid filling use which has pin-hole resistance at bending and impact resistance and also has excellent smell retention properties can be realized by a packaging material which comprises a biaxially stretched polybutylene terephthalate film composed of at least a polybutylene terephthalate resin or composed of a polyester resin composition containing a polybutylene terephthalate resin and a polyethylene terephthalate resin in an amount of not more than 30% by weight relative to the weight of the polybutylene terephthalate resin and which can have not more than 10 pinholes formed therein when the film is bent 1000 times under the conditions of 5°C and 40% RH.

However, in the techniques disclosed in Patent Document 2 and Patent Document 3, a film formation method by tubular simultaneous biaxial stretching is employed for manufacturing a film. Therefore, the thickness precision of the resultant film is poor due to the manufacturing method thereof. Furthermore, since a plane orientation coefficient cannot be increased, impact resistance is poor. Therefore, there is still plenty of room for improving in the techniques for achieving all of moisture resistance, pin-hole resistance, bag rupture resistance and gas barrier properties at high levels.

PRIOR ART DOCUMENTS

PATENT DOCUMENTS

Patent Document 1: JP-A-2013-256573
Patent Document 2: JP-A-2013-256047
Patent Document 3: JP-A-2014-015233

## SUMMARY OF THE INVENTION

### PROBLEMS TO BE SOLVED BY THE INVENTION

The present invention has been made with the above-mentioned technical problem as a backdrop. That is, the object of the present invention is to provide: a biaxially stretched polybutylene terephthalate film which has all of excellent thickness precision, excellent pin-hole resistance and excellent bag rupture resistance and can achieve excellent barrier properties when a gas barrier layer is provided thereon; and a method for manufacturing the film.

### SOLUTIONS TO THE PROBLEMS

The present inventors have made extensive and intensive studies for the purpose of achieving the above-mentioned purpose. As a result, the present invention has been accomplished.

A biaxially stretched polybutylene terephthalate film, wherein the biaxially stretched polybutylene terephthalate film containing not less than 90% by mass of polybutylene terephthalate, and the plane center average roughness of a 500-nm square region that does not contain a protrusion resulting from inert particles in at least one surface of the film is not more than 1.0 nm.

In this case, it is preferable that the scattered light intensity ratio in a scattering vector-scattered light intensity diagram obtained by measuring wide-angle X-ray diffraction of the film from the Edge direction of the film meets the requirement represented by formula (1):

$$I_1/I_2 > 1.0 \ (1)$$

wherein $I_1$ represents a scattered light peak intensity in a scattering vector originated from (100) plane of a polybutylene terephthalate crystal structure as observed in the direction parallel with the film thickness direction when an X-ray is incident from the Edge direction of the film; and $I_2$ represents a scattered light peak intensity in a scattering vector originated from (010) plane of a polybutylene terephthalate crystal structure as observed in the direction parallel with the film MD direction when an X-ray is incident from the Edge direction of the film.

In this case, a method for manufacturing the biaxially stretched polybutylene terephthalate film is characterized by biaxially stretching a non-stretched sheet that is produced by laminating not less than 60 layers having the same composition to form a multi-layer laminate and then casting the multi-layer laminate. In this case, it is preferable that the method for stretching the biaxially stretched polybutylene terephthalate film is a sequential biaxial stretching method.

In the present invention, a gas barrier laminate film comprising the biaxially stretched polybutylene terephthalate film according to the present invention and a gas barrier layer laminated on at least one surface of the biaxially stretched polybutylene terephthalate film is also included, and the gas barrier layer to be laminated on at least one surface of the biaxially stretched polybutylene terephthalate film is preferably a deposited oxide film.

### EFFECTS OF THE INVENTION

It is possible to provide a biaxially stretched polybutylene terephthalate film which has all of excellent thickness precision, excellent pin-hole resistance and excellent bag rupture resistance and can achieve excellent barrier properties when a gas barrier layer is provided thereon.

## BRIEF DESCRIPTION OF THE DRAWINGS

Fig. 1 is an atomic force microscope (AMF) image of the surface of a film of Example 1.
Fig. 2 is an atomic force microscope (AMF) image of the surface of a film of Comparative Example 2.
Fig. 3 is a scattering vector-scattered light intensity diagram of Example 1.
Fig. 4 is a scattering vector-scattered light intensity diagram of Comparative Example 2.

## MODE FOR CARRYING OUT THE INVENTION

The present invention will be described in detail hereinbelow.

A polyester resin composition to be used for the biaxially stretched polybutylene terephthalate according to the present invention contains PBT as the main component, wherein the content of PBT is preferably not less than 90% by mass, more preferably not less than 95% by mass. If the content is less than 90% by mass, the impact strength and pinhole resistance of the film may be deteriorated, and therefore the properties of the film may be insufficient.

In PBT to be used as the main component, terephthalic acid is contained as a dicarboxylic acid component preferably in an amount of not less than 90 mol%, more preferably in an amount of not less than 95 mol%, still more preferably in an amount of not less than 98 mol%, most preferably in an amount of 100 mol%. In PBT, 1,4-butanediol is contained as a glycol component preferably in an amount of not less than 90 mol%, more preferably in an amount of not less than 95 mol%, still more preferably in an amount of not less than 97 mol%, most preferably in such an amount that only a byproduct produced by the ether bonding of 1,4-butanediol is contained during polymerization.

The polyester resin to be used in the present invention can contain a polyester resin other than PBT for the purpose of controlling the film formation performance during biaxial stretching and the mechanical properties of a film produced.

Examples of the polyester resin (B) other than PBT include: polyester resins such as polyethylene terephthalate (PET), polyethylene naphthalate (PEN), polybutylene naphthalate (PBN) and polypropylene terephthalate (PPT); PBT resins produced by the copolymerization with a dicarboxylic acid such as isophthalic acid, ortho-phthalic acid, a naphthalenedicarboxylic acid, a biphenyldicarboxylic acid, a cyclohexanedicarboxylic acid, adipic acid, azelaic acid and sebacic acid; and PBT resins produced by the copolymerization with a diol component such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol and polycarbonatediol.

The upper limit of the addition amount of the polyester resin other than PBT is preferably not more than 10% by mass, more preferably not more than 5% by mass. If the addition amount of the polyester resin other than PBT is more than 10% by mass, mechanical properties imparted by PBT may be deteriorated, and therefore the impact strength, bag rupture resistance and pinhole resistance of the film may become insufficient, and the transparency and barrier properties of the film may also be deteriorated.

The lower limit of the melting temperature of the resin is preferably 200°C. If the melting temperature is lower than 200°C, ejection might become unstable. The upper limit of the melting temperature of the resin is preferably 300°C. If the melting temperature is higher than 300°C, the resin might be deteriorated.

Each of the PBT and the polyester resin other than PBT may optionally contain a conventionally known additive, such as a lubricant, a stabilizer, a coloring agent, an antioxidant agent, an antistatic agent and an ultraviolet ray absorber.

As the lubricant species, inorganic lubricants such as silica, calcium carbonate and alumina and organic lubricants are preferred, and silica and calcium carbonate are more preferred. Among these lubricants, silica is particularly preferred because silica can reduce the haze of the film. By using these lubricants, transparency and lubricity can be exerted.

The lower limit of the concentration of the lubricant is preferably 100 ppm. If the concentration is less than 100 ppm, lubricity is sometimes deteriorated. The upper limit of the lubricant is preferably 20000 ppm. If the concentration is more than 20000 ppm, transparency is sometimes deteriorated. With respect to the size of the lubricant, the lubricant preferably has an average particle diameter of not less than 1 $\mu$m from the viewpoint of the formation of protrusions, and the lubricant preferably has an average particle diameter of not more than 3 $\mu$m from the viewpoint of transparency.

As a preferred method for producing the film according to the present invention, a method in which raw materials having the same composition are laminated to form a multi-layer laminate and then casting the multi-layer laminate can be mentioned.

Because PBT has a high crystallization rate, the crystallization of PBT proceeds during casting. In this regard, if PBT is casted in the form of a single layer structure instead of a multi-layer structure, there is no barrier that can prevent the growth of crystals of PBT, and therefore the crystals can grow into spherical crystals having larger sizes. As a result, the yield stress of a non-stretched sheet obtained by the casting increases and, therefore, the non-stretched sheet can be broken easily during biaxial stretching. In addition, the flexibility of a biaxially stretched film thus produced is deteriorated, resulting in the insufficiency of the pinhole resistance and bag rupture resistance of the film.

On the other hand, the present inventors have found that, when multiple layers of same resin are laminated to form a non-stretched sheet, the stretching stress of the non-stretched sheet can be reduced and the biaxial stretching of the non-stretched sheet can be achieved stably.

It is assumed that this is because layer-layer interfaces are formed even when layers made from same resin are laminated. When the multi-layer film is casted, molecules of the polymer are rarely intertwined with each other beyond interfaces between the layers, resulting in the reduction in a force needed for untangling the intertwining between the molecules of the polymer, i.e., the reduction in a stress generated during stretching. It is also assumed that the intertwining of the molecules of the polymer beyond the interfaces between the layers in a stretched film produced from the non-stretched sheet is reduced, resulting in the production of a film that can be stretched easily and has flexible properties.

As a specific example of the technique for forming a multi-layer structure to reduce the sizes of spherical crystals, a conventional multi-layer formation device (e.g., a multi-layer feed block, a static mixer, a multi-layer multimanifold) can be used. For example, a method in which a thermoplastic resin that is extruded through different flow paths using at least two extruders is laminated into a multi-layer sheet with a feed block, a static mixer, a multimanifold die or the like can be employed. In the case where a thermoplastic resin is formed into multiple layers having the same composition as described in the present invention, the purpose of the present invention can also be achieved by using a single extruder and installing the above-mentioned multi-layer formation device into a melt line located between the extruder and a die.

The lower limit of the die temperature is preferably 200°C. If the die temperature is lower than the above-mentioned temperature, the discharge of the resin becomes unstable, sometimes resulting in unevenness of the thickness of the resultant film. The upper limit of the die temperature is preferably 320°C. If the die temperature is higher than the above-mentioned temperature, the thickness of the resultant film becomes uneven and the resin is degraded to cause the contamination in a die lip and the like, sometimes resulting in deterioration in appearance of the film.

The lower limit of the chill roll temperature is preferably 0°C. If the chill roll temperature is lower than the above-mentioned temperature, the effect of preventing crystallization sometimes reaches a level of saturation. The upper limit of the chill roll temperature is preferably 25°C. If the chill roll temperature is higher than the above-mentioned temperature, the degree of crystallinity becomes too high, sometimes resulting in the difficulty in stretching. In the case where the chill roll temperature falls within the above-mentioned range, it is preferred to reduce the humidity in an environment around the chill roll for the purpose of preventing the occurrence of dew condensation.

During casting, the resin having a higher temperature comes in contact with the surface of the chill roll, and therefore the temperature of the chill roll increases. Generally, the chill roll can be cooled by flowing cooling water through a pipe placed inside of the chill roll. Therefore, it is required to reduce the variation in temperature of the surface of the chill roll in the width direction by ensuring a sufficient volume of cooling water, by arranging the position of the pipe, by doing maintenance so as to avoid the adhesion of sludge onto the pipe, or the like. Particularly in the case where the sheet is cooled to a lower temperature without employing a method such as a multi-layer formation method, attention be paid.

In this regard, the thickness of the non-stretched sheet is preferably 15 to 2500 $\mu$m.

In the casting of a multi-layer structure as mentioned above, the number of layers in the multi-layer structure is not less than 60 layers, preferably not less than 250 layers, more preferably not less than 1000 layers. If the number of the layers is too small, the sizes of spherical crystals in the non-stretched sheet become large, resulting in the reduction in the stretchability-improving effect and the elimination of the effect of reducing a yield stress of the biaxially stretched film.

Next, the stretching method will be described. The stretching method may be in a simultaneous biaxial stretching mode or a sequential biaxial stretching mode. In order to improve puncture strength of the resultant film, it is required to increase a plane orientation coefficient of the film. From this viewpoint, a sequential biaxial stretching mode is preferred.

The lower limit of the machine direction (referred to as "MD", hereinbelow) stretching temperature is preferably 50°C, more preferably 55°C. If the MD stretching temperature is lower than 50°C, the breakage of the film is likely to occur. The upper limit of the MD stretching temperature is preferably 100°C, more preferably 95°C. If the MD stretching temperature is higher than 100°C, the orientation of molecules of the polymer cannot occur, sometimes resulting in deterioration in mechanical properties of the film.

The lower limit of the MD stretch ratio is preferably 3.0 times, particularly preferably 3.3 times. If the MD stretch ratio is smaller than the above-mentioned value, the orientation of molecules of the polymer cannot occur, sometimes resulting in deterioration in mechanical properties, and thickness evenness of the film. The upper limit of the MD stretch ratio is preferably 5 times, more preferably 4.5 times, particularly preferably 4.0 times. If the MD stretch ratio is larger than the above-mentioned value, the effect of improving mechanical strength and thickness unevenness sometimes reaches a level of saturation.

The lower limit of the transverse direction (referred to as "TD", hereinbelow) stretching temperature is preferably 50°C. If the TD stretching temperature is lower than the above-mentioned temperature, the breakage of the film is likely to occur. The upper limit of the TD stretching temperature is preferably 100°C. If the TD stretching temperature is higher than the above-mentioned temperature, the orientation of molecules of the polymer cannot occur, sometimes resulting in the deterioration in mechanical properties of the film.

The lower limit of the TD stretch ratio is preferably 3.0 times, more preferably 3.3 times, particularly preferably 3.5 times. If the TD stretch ratio is less than the above-mentioned value, the orientation of molecules of the polymer cannot occur, sometimes resulting in the deterioration in mechanical properties and thickness evenness of the film. The upper limit of the TD stretch ratio is preferably 5 times, more preferably 4.5 times, particularly preferably 4.0 times. If the TD stretch ratio is more than the above-mentioned value, the effect of improving mechanical strength and thickness unevenness of the film sometimes reaches a level of saturation.

The lower limit of the TD thermal fixing temperature is preferably 190°C, more preferably 200°C. If the TD thermal fixing temperature is lower than the above-mentioned temperature, the coefficient of thermal shrinkage of the film is increased, sometimes resulting in the displacement or shrinkage of the film during the processing of the film. The upper limit of the TD thermal fixing temperature is preferably 250°C. If the TD thermal fixing temperature is higher than the above-mentioned temperature, the film may be melted or, if not, may become brittle.

The lower limit of the TD relaxation ratio is preferably 0.5%. If the TD relaxation ratio is less than the above-mentioned value, the breakage of the film is likely to occur during thermal fixing of the film. The upper limit of the TD relaxation ratio is preferably 10%. If the TD relaxation ratio is more than the above-mentioned value, the slacking of the film sometimes occurs, resulting in unevenness of thickness of the film.

In the biaxially stretched film according to the present invention, the lower limit of the film thickness is preferably 3 $\mu$m, more preferably 5 $\mu$m, still more preferably 8 $\mu$m. If the film thickness is less than 3 $\mu$m, the strength of the film sometimes becomes insufficient. The upper limit of the film thickness is preferably 100 $\mu$m, more preferably 75 $\mu$m, still more preferably 50 $\mu$m. If the film thickness is more than 100 $\mu$m, the film is too thick and, therefore, the processing of the film, which is carried out in order to achieve the purpose of the present invention, sometimes becomes difficult.

The present inventors found that a film produced by biaxially stretching a non-stretched sheet that is produced by laminating multiple layers of a single resin to form a multi-layer laminate and then casting the multi-layer laminate as mentioned above has such a structure that (100) plane in the PBT crystal structure is more parallel with the film plane compared with a film produced by biaxially stretching a non-stretched film that is produced by casting a layer of the resin without forming the multi-layer laminate of the resin. It is assumed that this is because crystals of PBT are constrained by interfaces formed as the result of the formation of the multi-layer laminate of the resin and, therefore, the crystals cannot rotate across the interfaces any more.

In addition, the present inventors also found that the (100) plane of a PBT crystal becomes parallel with the film plane, and consequently the smoothness of a minute region that does not contain protrusions resulting from inert particles (the lubricant) on the film surface is improved compared with that in a single-layer film. It is also found that a laminate film having good gas barrier properties can be manufactured by laminating a gas barrier layer on the above-mentioned smooth surface.

The smoothness of a minute region that does not contain protrusions resulting from inert particles can be defined by a center average roughness (Ra) of a 500-nm square region that does not contain inert particles. The region that does not contain protrusions resulting from inert particles refers to a region that does not contain protrusions each having a size of not less than 20 nm, and can be defined by a center average roughness (Ra) of a 500-nm square region that does not contain protrusions each having a size of not less than 20 nm.

The upper limit of the center average roughness of a 500-nm square region that does not contain protrusions resulting from inert particles is preferably 1.0 nm, more preferably 0.95 nm, more preferably 0.9 nm, still more preferably 0.8 nm. If the center average roughness is more than the upper limit, the smoothness of the minute region on the film surface might be deteriorated and the barrier properties of the film having a gas barrier layer laminated thereon might also be deteriorated.

In the present invention, although it is essential only that the center average roughness Ra of a 500-nm square region that does not contain protrusions each having a size of not less than 20 nm is not more than 1.0 nm in at least one surface of the film, it is preferred that the Ra value is not more than 1.0 nm in both surfaces of the film.

Whether or not (100) plane of a PBT crystal has a structure parallel with the film plane can be confirmed by a wide-angle X-ray diffraction measurement.

Specifically, when the scattered light intensity ratio calculated using a scattering vector-scattered light intensity diagram obtained by measuring wide-angle X-ray diffraction of the film from the Edge direction of the film meets the requirement represented by formula (1) shown below, it is determined that the number of (100) planes of a PBT crystal which are oriented in the direction parallel with the film plane is greater compared with the number of (010) planes of the PBT crystal which are oriented in the direction perpendicular to the film plane.

$$I_1/I_2 > 1.0 \ (1)$$

The lower limit of the scattered light intensity ratio $I_1/I_2$ which is calculated using a scattering vector-scattered light intensity diagram obtained by measuring wide-angle X-ray diffraction of the film from the Edge direction of the film is preferably 1.0, more preferably 2.0, still more preferably 3.0.

If the scattered light intensity ratio is lower than the lower limit, the number of (100) planes of a PBT crystal structure which have an orientation parallel with the film plane in the stretched film might be reduced, the smoothness in minute regions on the film surface might be deteriorated, and the barrier properties of the film having a gas barrier layer laminated thereon might be deteriorated.

The X-ray generation source to be used in the wide-angle X-ray diffraction measurement may be a device that has been generally used in laboratories, such as a tube-type device and a rotatable device, and it is preferred to use radiation light as the X-ray generation source. When radiation light is used, X-ray is hardly extended and luminance is high, and therefore the measurement can be carried out with high accuracy and within a shorter period. Therefore, even when a film sample having a thickness of several tens of microns is used for the measurement, the measurement can be carried out using only one film without requiring the lamination of multiple layers of the films, and the measurement can also be achieved with high accuracy. For these reasons, radiation light can be used preferably for a detail crystal orientation evaluation.

The lower limit of the plane orientation coefficient of the film according to the present invention is preferably 0.120, more preferably 0.135, still more preferably 0.139. If the plane orientation coefficient is less than the above-mentioned value, the puncture strength, impact strength and the like of the film are sometimes deteriorated. The upper limit of the plane orientation coefficient of the film according to the present invention is preferably 0.150. If the plane orientation coefficient is more than 0.150, the productivity of the film is sometimes reduced and the flexibility of the film is sometimes deteriorated. The plane orientation coefficient can be adjusted to a value falling within the above-mentioned range by adjusting the MD stretch ratio or the thermal fixing temperature. As the stretching method to be employed, a sequential biaxial stretching method is preferred compared to a simultaneous biaxial stretching method, and a sequential biaxial stretching method in which the film is stretched in the MD direction and then stretched in the TD direction is particularly preferred.

The lower limit of the thickness-direction refractive index of the film according to the present invention is preferably 1.490, more preferably 1.492, still more preferably 1.494. If the thickness-direction refractive index is less than the above-mentioned value, the orientation of molecules of the polymer becomes too high, and therefore the lamination strength between the film and a sealant becomes insufficient, sometimes resulting in the deterioration in bag rupture resistance of the film.

The upper limit of the thickness-direction refractive index of the film according to the present invention is preferably 1.510, more preferably 1.505, still more preferably 1.502. If the thickness-direction refractive index is more than the above-mentioned value, the orientation of molecules of the polymer in the film becomes insufficient, sometimes resulting in the insufficiency of mechanical properties of the film.

The lower limit of the intrinsic viscosity of the film according to the present invention is preferably 0.8, more preferably 0.85, still more preferably 0.9. If the intrinsic viscosity is less than the above-mentioned value, the puncture strength, impact strength, bag rupture resistance and the like of the film are sometimes deteriorated. The upper limit of the intrinsic viscosity of the film is preferably 1.2. If the intrinsic viscosity is more than the above-mentioned value, the stress generated during stretching becomes too high, sometimes resulting in the deterioration in film formation performance.

It is preferred that the composition of the resin present in the whole area of the biaxially stretched polybutylene terephthalate film according to the present invention is the same.

In addition, a layer made from another material may be laminated on the biaxially stretched polybutylene terephthalate film according to the present invention. As the method for the lamination, the layer may be laminated on the biaxially stretched polybutylene terephthalate film according to the present invention after or during the production of the film.

The lower limit of the impact strength ($J/\mu m$) of the film according to the present invention is preferably 0.05, more preferably 0.058, still more preferably 0.067. If the impact strength is less than the above-mentioned value, the strength of the film may become insufficient in the case where the film is intended to be used as a bag.

The upper limit of the impact strength ($J/\mu m$) is preferably 0.2. If the impact strength is more than the above-mentioned value, the improving effect sometimes reaches a level of saturation.

The upper limit of the haze (%) of the film of the present invention is preferably 6%, more preferably 5.5%, still more preferably 5%.

If the haze exceeds the upper limit, there is a possibility that, when characters or an image is printed on the film, the quality of the printed characters or image is deteriorated.

The lower limit of the coefficient of thermal shrinkage (%) in each of the MD direction and the TD direction of the film according to the present invention is preferably 0. If the coefficient of thermal shrinkage is less than the above-mentioned value, the improving effect sometimes reaches a level of saturation and the film becomes sometimes brittle mechanically.

The upper limit of the coefficient of thermal shrinkage (%) in each of the MD direction and the TD direction of the film according to the present invention is preferably 4.0, more preferably 3.0, still more preferably 2.0, particularly preferably 1.9. If the coefficient of thermal shrinkage is more than the above-mentioned value, pitch deviation and the like are sometimes caused due to the change in dimension of the film during a processing procedure such as printing.

The biaxially stretched polybutylene terephthalate film according to the present invention can achieve excellent gas barrier properties when a gas barrier layer is provided on at least one surface of the film to produce a laminate film.

As the gas barrier layer to be laminated on the biaxially stretched polybutylene terephthalate film according to the present invention, an inorganic thin film layer that is a thin film made from a metal or an inorganic oxide or a coating layer made from a barrier resin such as polyvinylidene chloride can be used preferably. Among these gas barrier layers, an inorganic thin film layer is preferably composed of a thin film made from a metal or an inorganic oxide. The material to be used for forming the inorganic thin film layer is not particularly limited, as long as the material can be made into a thin film. From the viewpoint of gas barrier properties, an inorganic oxide such as silicon oxide (silica), aluminum oxide (alumina), a mixture of silicon oxide and aluminum oxide and the like can be mentioned preferably. Particularly, from the viewpoint of the achievement of both flexibility and density of the thin film layer, a composite oxide composed of silicon oxide and aluminum oxide is preferred. In the composite oxide, it is preferred that silicon oxide and aluminum oxide are mixed at such a mixing ratio that the concentration of Al is 20 to 70% in terms of metal content by mass. If the concentration of Al is less than 20%, the barrier properties against water vapor might be decreased. If the concentration of Al is more than 70%, on the other hand, the inorganic thin film layer tends to be harder and there is a possibility that the film is broken during fabrication such as printing and lamination to cause the deterioration in barrier properties. The term "silicon oxide" as used herein refers to any one of various silicon oxide components such as SiO and $SiO_2$ or a mixture thereof, and the term "aluminum oxide" refers to any one of various aluminum oxide components such as AlO and $Al_2O_3$ or a mixture thereof.

The thickness of the inorganic thin film layer is generally 1 to 800 nm, preferably 5 to 500 nm. If the thickness of the inorganic thin film layer is less than 1 nm, acceptable gas barrier properties might not be achieved. On the other hand, if the thickness is increased to more than 800 nm, the gas barrier properties-improving effect consistent with such increase in the thickness cannot be obtained and it would become disadvantageous from the viewpoint of bending resistance and production cost.

The method for forming the inorganic thin film layer is not particularly limited, and a known vapor deposition method such as a physical vapor depositing method (a PVD method), e.g., a vacuum vapor deposition method, a sputtering method and an ion plating method, or a chemical vapor deposition method (a CVD method) may be employed appropriately. Hereinbelow, a typical method for forming the inorganic thin film layer is described with taking a silicon oxide-aluminum oxide-based thin film as an example. For example, in the case where a vacuum vapor deposition method is employed, a mixture of $SiO_2$ and $Al_2O_3$, a mixture of $SiO_2$ and Al or the like is used preferably as a vapor deposition raw material. As the vapor deposition raw material, particles are generally used. In this case, it is desirable that each of the particles has such a size that the change in pressure during the vapor deposition cannot be caused, and a preferred particle diameter of each of the particles is 1 to 5 mm. For performing heating, a heating mode such as resistance heating, high-frequency induction heating, electron beam heating and laser heating can be employed. As a reaction gas, an oxygen gas, a nitrogen gas, a hydrogen gas, an argon gas, a carbon dioxide gas, a water vapor or the like can be introduced. Alternatively, a reactive deposition method such as a deposition method by means of the addition of ozone, the ion assisted deposition method and the like may also be employed. In addition, the film formation conditions may be varied as appropriate; for example, a bias may be applied to a material to be subjected to deposition (i.e., a laminate film to be subjected to deposition), and a material to be subjected to deposition may be heated or cooled. In the case where a sputtering method or a CVD method is employed, the deposition material, the reaction gas, the bias to be applied to a material to be subjected to deposition, the heating/cooling of a material to be subjected to deposition and the like can also vary as mentioned above.

It should be noted that the present application claims the benefit of priority based on Japanese Patent Application No. 2014-105703 filed on May 21, 2014. The entire contents of the description of Japanese Patent Application No. 2014-105703 filed on May 21, 2014, are incorporated herein by reference.

EXAMPLES

Next, the present invention will be described in more detail by way of examples. However, the present invention is not intended to be limited by the following examples. In the following examples, the evaluation of a film was carried out by the following measurement methods.

[Continuous film formation performance]

The film formation performance of a biaxially stretched film was evaluated in accordance with the following criteria. It was determined that a biaxially stretched film had good productivity when the rating of the film was "○" or "Δ"

○: The film was formed without breakage and was produced continuously.
Δ: The film formation performance was somewhat unstable to such an extent that the breakage of the film rarely occurred but the film was still produced continuously.
×: The breakage of the film occurred frequently, and therefore the film was hard to produce continuously.

[Thickness]

The thickness of a biaxially stretched film was measured by the method in accordance with JIS-Z-1702.

[Intrinsic viscosity of film]

A specimen was dried in vacuo all night and all day at 130°C and then milled or cut. A portion (80 mg) of the resultant product was correctly weighed, and then dissolved in a phenol/tetrachloroethane (= 60/40 (by volume)) mixed solution by heating at 80°C for 30 minutes, and added to. the phenol/tetrachloroethane mixed solution to a volume of 20 ml. The viscosity of the resultant solution was measured at 30°C.

[Plane center average roughness (Ra(nm))]

A plane center average roughness was measured with an atomic force microscope (SPM9700, manufactured by Shimadzu Corporation). The measurement was carried out under the below-mentioned conditions. When a protrusion having a size of not less than 20 nm was detected in a measurement region, the measurement region was changed to another region where any protrusion having a size of not less than 20 nm was not detected. The number of measurement points was 10 points in total per one sample. The plane center average roughness (Ra) of an image obtained using accessory image analysis software of the device was calculated.

The measurement for each sample was carried out on a face that is brought into contact with a chill roll during casting (i.e., an F face) and a face that was opposed to the F face (i.e., a B face).

Mode: a dynamic mode
Cantilever : Micro Cantilever, manufactured by ORIMPUS CORPORATION, OMCL-AC200TS-C3, resonance frequency 150 (Hz), spring constant 9 (N/m)
Measurement area: a 500 nm $\times$ 500 nm square area
Scanning speed: 1 Hz
Number of scanning lines: 512 lines $\times$ 512 lines

[Wide-angle X-ray diffraction]

In Examples of the present invention, a film to be measured was set in the second hatch of Beamline BL03XU, which is owned by Frontier Soft Matter Beamline (FSBL), in a large synchrotron radiation facility SPring-8 in such a manner that the angle between the direction of an X-ray source and the cross section of the film taken in the Edge direction was vertical, and a wide-angle X-ray scattering (WAXS) measurement was carried out from the Edge direction of the film. The conditions for the measurement are as follows.

The wavelength of X-ray was 0.1 nm, an imaging plate (RIGAKU R-AXIS VII) or an image intensifier-attached CCD camera (Hamamatsu Photonics V7739P + ORCA R2) was used as a detector, and a transmittance was calculated from the values of ion chambers that were set in front of and on the back of the sample. The obtained two-dimensional image was subjected to air scatter correction while a dark current (a dark noise) and the transmittance were taken into consideration. Cerium oxide ($CeO_2$) was used for the measurement of a camera length, and an azimuth profile of (110) plane was calculated using Fit2D (software manufactured by European Synchrotron Radiation Facility; [http://www.esrf.eu/computing/scientific/FIT2D/].)

[Scattered light intensity ratio ($I_1/I_2$)]

A profile in a direction parallel with the film thickness direction (i.e., the equatorial direction) and a profile in the direction parallel with the film MD direction (i.e., the meridional direction) in a scattering vector-scattered light intensity diagram obtained for each sample were extracted.

A scattered light peak intensity ($I_1$) originated from (100) plane of a PBT crystal which appeared around a scattering vector of 16.5 nm$^{-1}$ in the profile in the direction parallel with the film thickness direction and a scattered light peak intensity ($I_2$) originated from (010) plane of the PBT crystal which appeared around a scattering vector of 12.3 nm$^{-1}$ in the profile in the direction parallel with the film MD direction were read out. The scattered light intensity ratio was calculated in accordance with formula (2) shown below.

$$\text{Scattered light intensity ratio} = I_1/I_2 \ (2)$$

($I_1$ represents a scattered light peak intensity in a scattering vector originated from (100) plane of a polybutylene terephthalate crystal structure as observed in the direction parallel with the film thickness direction when an X-ray is incident from the Edge direction of the film; and $I_2$ represents a scattered light peak intensity in a scattering vector originated from (010) plane of a polybutylene terephthalate crystal structure as observed in the direction parallel with the film MD direction when an X-ray is incident from the Edge direction of the film.)

[Thickness precision (Tv (%))]

A film piece was cut out from the resultant film roll in the width direction, and the thickness was measured with a dial gauge at a 5 cm pitch.

[Haze value]

The measurement of a haze value was carried out at different three points in a sample in accordance with the method prescribed in JIS-K-7105 using a haze meter (NDH2000; manufactured by Nippon Denshoku Industries Co., Ltd.), and the average value of the measurement values was defined as a haze of the sample.

[Thickness-direction refractive index, plane orientation coefficient]

Ten specimens were collected from a roll sample in the width direction. Each of the specimens was measured with respect to a film length-direction refractive index ($n_x$), a film width-direction refractive index ($n_y$) and a film thickness-direction refractive index ($n_z$) in accordance with JIS K 7142-1996 5.1 (Method A) using an Abbe's refractometer with sodium D line as a light source, and a plane orientation coefficient ($\Delta P$) was calculated in accordance with the equation shown below. The average of the calculated plane orientation coefficient values was employed as a plane orientation coefficient of the sample.

$$\Delta P = (n_x + n_y)/2 - n_z$$

[Impact strength]

The strength of a film against impact punching was measured in an atmosphere having a temperature of 23°C using an impact tester manufactured by Toyo Seiki Seisaku-sho, Ltd. An impacting spherical surface used had a diameter of 1/2 inch. Unit: J/$\mu$m.

[Coefficient of thermal shrinkage]

The coefficient of thermal shrinkage of a polybutylene terephthalate film was measured by the dimensional change test method in accordance with JIS-C-2318 except that the test temperature was 150°C and the heating time was 15 minutes.

[Pinhole resistance]

A film was dry-laminated on an LLDPE sealant ("L4102", manufactured by Toyobo Co., Ltd., thickness: 40 $\mu$m), and the resultant product was cut into a piece having a size of 20.3 cm (8 inches) × 27.9 cm (11 inches) to produce an oblong test film. The oblong test film obtained by the cutting was allowed to leave under the conditions of a temperature of 23°C and a relative humidity of 50% for 24 hours or longer to condition the test film. Thereafter, the oblong test film was wound into a cylindrical form having a length of 20.3 cm (8 inches). One end of the cylindrical film was fixed to the outer periphery of a disc-like fixing head of a Gelbo flex tester (Model No. 901, manufactured by Rigaku Kogyo Co., Ltd.) (in accordance width the standard of MIL-B-131C), and the other end of the cylindrical films was fixed to the outer periphery of a disc-like movable head, which faced the fixing head 17.8 cm (7 inches) apart, of the tester. A bending test was repeated continuously 2000 cycles at a speed of 40 cycles per minute, in which one cycle of the bending test was as follows: the movable head was rotated 440° while approaching the movable head by 7.6 cm (3.5 inches) toward the fixing head along an axis between both of the heads which faced each other in parallel, then the movable head was allowed to travel in a straight line by 6.4 cm (2.5 inches) without rotating the movable head, and then these operations were also performed in opposite directions so as to return the movable head to its original position. The test was carried out at 5°C. Thereafter, the number of pinholes formed in an area having a size of 17.8 cm (7 inches) × 27.9 cm (11 inches) in the tested film, excluding an area at which the film was fixed to the outer periphery of the fixing head and an area at which the film was fixed to the outer periphery of the movable head, was counted (in other words, the number of pinholes per an area of 497 cm$^2$ (77 square inches) was counted).

[Bag rupture resistance]

A film was dry-laminated on an LLDPE sealant (L4102; manufactured by Toyobo Co., Ltd., thickness: 40 $\mu$m), and the resultant product was cut into 15 square-cm pieces. Two of the pieces were overlaid on each other in such a manner that the sealant surfaces faced inward, and three sides of the resultant product were heat-sealed at a sealing temperature of 160°C and a seal width of 1.0 cm to produce a three side-sealed bag having an inside dimension of 13 cm. The three side-sealed bag was filled with 250 mL of water, and then an opening of the bag was closed by means of heat sealing to produce a four side-sealed bag having water filled therein. The four side-sealed bag thus produced was dropped from the height of 100 cm against a concrete plate in an environment having a chamber temperature of 5°C and a humidity of 35% RH, and the number of times of dropping of the bag until the breakage of the bag or the formation of pinholes occurred.

[Oxygen permeability]

The oxygen permeability was carried out in accordance with the method prescribed in JIS K7126-2 A using an oxygen transmittance measurement device ("OX-TRAN 2/21"; manufactured by MOCON Inc.) under the conditions of 23°C and 65% RH. In the measurement, the inorganic thin film surface was deemed as an oxygen gas side.

[Water vapor permeability]

The water vapor permeability was measured in accordance with the method prescribed in JIS K7129 B using a water vapor permeability measurement device ("PERMATRAN-W 3/31"; manufactured by MOCON Inc.) under the conditions of 40°C and 90% RH. In the measurement, the inorganic thin film surface was deemed as a high-humidity side.

[Raw material resin]

(PBT resin)

In the manufactured of films in Examples 1 to 5 mentioned below, 1100-211XG (CHANG CHUN PLASTICS CO. LTD., intrinsic viscosity 1.28 dl/g) was used as the PBT resin that was the main raw material.

(Preparation of polyester resin having improved electrostatic adhesion: PET1)

An esterification reaction can was heated. A slurry composed of terephthalic acid [86.4 parts by mass] and ethylene glycol [64.4 parts by mass] was charged into the can at the time point at which the temperature in the can reached 200°C, and then antimony trioxide [0.025 parts by mass] and triethylamine [0.16 parts by mass] were added as catalysts thereto while stirring the slurry. Subsequently, the temperature of the resultant mixture was raised by heating and then the reaction mixture was subjected to an esterification reaction under pressure under conditions of a gauge pressure of 0.34 MPa and 240°C. Subsequently, the pressure in the esterification reaction can was reduced to ambient pressure, and then magnesium acetate tetrahydrate [0.34 parts by mass] and trimethyl phosphate [0.042 parts by mass] were added in this order to the reaction mixture. The resultant reaction mixture was heated to 260°C over 15 minutes, and then trimethyl phosphate [0.036 parts by mass] and sodium acetate [0.0036 parts by mass] were added in this order to the reaction mixture. An esterification reaction product thus produced was transferred to a polycondensation reaction can and then heated gradually from 260°C to 280°C under reduced pressure, and a polycondensation reaction was carried out at 285°C. After the completion of the polycondensation reaction, the reaction product was filtrated with a filter that was made from a stainless steel sintered material and had a pore size of 5 $\mu$m (initial filtration efficiency: 95%), and then the resultant polycondensation reaction product was pelletized, thereby producing a PET resin that had a ratio of the content of alkali earth metal atoms (M2) to the content of phosphorus atoms (P) (i.e., M2/P) of 2.24 and an intrinsic viscosity 0.61. The PET resin was named "PET1".

(Preparation of polyethylene terephthalate resin: PET2)

An esterification reaction can was heated. A slurry composed of terephthalic acid [86.4 parts by mass] and ethylene glycol [64.4 parts by in the can reached 200°C, and then antimony trioxide [0.025 parts by mass] and triethylamine [0.16 parts by mass] were added as catalysts thereto while stirring the slurry. Subsequently, the temperature of the resultant mixture was raised by heating and then the reaction mixture was subjected to an esterification reaction under pressure under conditions of a gauge pressure of 0.34 MPa and 240°C. An esterification reaction product thus produced was transferred to a polycondensation reaction can and then heated gradually from 260°C to 280°C under reduced pressure, and a polycondensation reaction was carried out at 285°C. After the completion of the polycondensation reaction, the reaction product was filtrated with a filter that was made from a stainless steel sintered material and had a pore size of 5 $\mu$m (initial filtration efficiency: 95%), and then the resultant polycondensation reaction product was pelletized, thereby producing a PET resin having an intrinsic viscosity 0.62 dl/g. The PET resin was named "PET2".

[Example 1]

A uniaxial extruder was used, and a master batch containing a PBT resin and silica particles having an average particle diameter of 2.4 $\mu$m, which served as inert particles, was added to the uniaxial extruder. A lubricant was added to the master batch so that the lubricant concentration was 1600 ppm. The resultant product was melted at 295°C, and a melt line was introduced into a 12-clement static mixer. In this manner, the division and lamination of a PBT melt were carried out to produce a multi-layer melt body in which layers were made from the same raw material. The melt body was casted through a T-die at 265°C, and then adhered onto a chill roll having a temperature of 15°C by an electrostatic adhesion method to produce a non-stretched sheet. Subsequently, the non-stretched sheet was roll-stretched in the longitudinal direction at a stretch ratio of 3.3 times at 60°C and then stretched in the traverse direction at a stretch ratio of 3.6 times through a tenter at 70°C. The sheet was subjected to a heat treatment under tension at 210°C for 3 seconds and then to a 5% relaxation treatment for 1 second, and both edge parts of the resultant sheet were removed by cutting to produce a PBT film having a thickness of 12 $\mu$m. The conditions employed for the formation of the film and the properties and evaluation results of the film are shown in Tables 1 and 3.

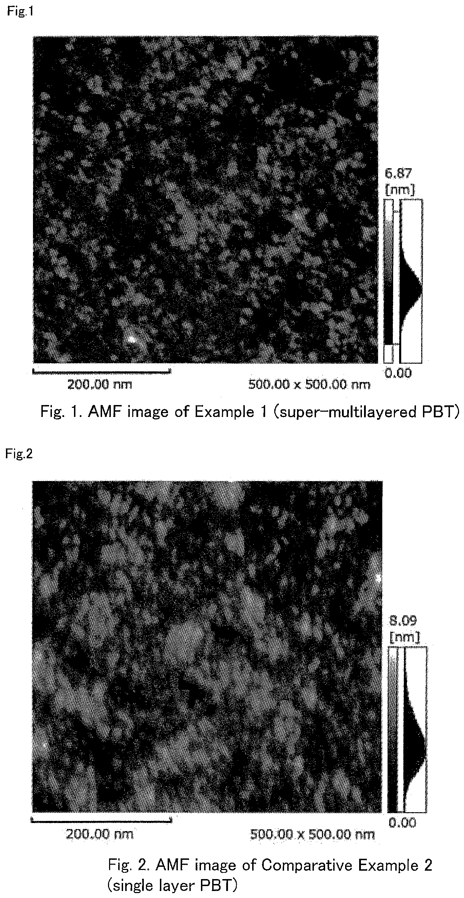

The atomic force microscope image of the surface of the film of Example 1, which was measured for determining a plane center average roughness Ra, is shown in Fig. 1.

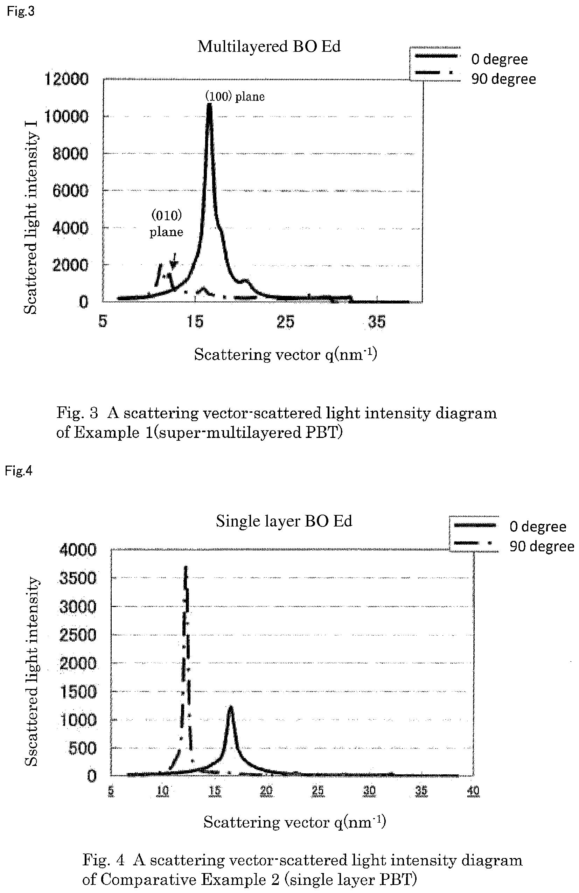

The scattering vector-scattered light intensity diagram of Example 1, which was measured for determining a scattered light intensity ratio ($I_1/I_2$), is shown in Fig. 3.

[Examples 2 to 4]

The same procedure as in Example 1 was carried out, except that the raw material compositions and the film formation conditions for biaxially stretched films shown in Table 1 were employed. The film formation conditions, physical properties and evaluation results of the resultant films are shown in Tables 1 and 3.

[Comparative Examples 1 to 3]

Films were manufactured under the conditions shown in Table 2 using a uniaxial extruder. The conditions employed for the formation of the films thus produced and the properties and evaluation results of the films are shown in Tables 2 and 4.

The atomic force microscope image of the surface of the film of Comparative Example 2, which was obtained for the purpose of determining a plane center average roughness Ra, is shown in Fig. 2.

The scattering vector-scattered light intensity diagram of Comparative Example 2, which was obtained for the purpose of determining a scattered light intensity ratio ($I_1/I_2$), is shown in Fig. 4.

[Reference Example 1]

A PBT film manufactured by Kansai Chemicals Co., Ltd., which is commercially available as a typical inflation biaxially stretched PBT film, was used.

[Formation (vapor deposition) of inorganic thin film layer]

Subsequently, a composite inorganic oxide layer composed of silicon dioxide and aluminum oxide was formed as an inorganic thin film layer on one surface of each of the films manufactured above by an electron beam vapor deposition method. As a vapor deposition source, particulate $SiO_2$ (purity: 99.9%) and particulate $Al_2O_3$ (purity: 99.9%) each having a size of about 3 to 5 mm were used. The compositional formulation of the composite oxide layer was $SiO_2/Al_2O_3$ (by mass) = 60/40. In a film thus produced (i.e., a film containing an inorganic thin film layer), the thickness of the inorganic thin film layer (an $SiO_2/Al_2O_3$ composite oxide layer) was 13 nm.

[Reference Example 2]

ECOSYAR (registered trademark) VE100, which is a dual-element deposited inorganic barrier PET film manufactured by Toyobo Co., Ltd., was used. The physical properties and the evaluation results of the film are shown in Tables 2 and 4.

Table. 1

| Item | | | Unit | Example | | | |
|---|---|---|---|---|---|---|---|
| | | | | 1 | 2 | 3 | 4 |
| Raw material | PBT resin | Raw resin I.V. | | 128 | 128 | 128 | 128 |
| | | Ratio | mass% | 100 | 100 | 95 | 60 |
| | Inert particle | Name | - | silica | silica | silica | silica |
| | | Ratio | ppm | 1600 | 1600 | 1600 | 1600 |
| | Polyester resin other than PBT | Name | - | - | | PET1 | PET2 |
| | | Ratio | mass% | - | - | 5 | 10 |
| Formation of the film | Extruding temperature | | °C | 265 | 265 | 270 | 275 |
| | super-multilayer laminate or not | | - | Yes | Yes | Yes | Yes |
| | Number of element | | piece | 12 | 12 | 10 | 10 |
| | Chill roll temperature | | °C | 15 | 15 | 15 | 15 |
| | Streching order | | - | MD-TD | MD-TD | MD-TD | MD-TD |
| | MD stretching temperature | | °C | 60 | 60 | 60 | 60 |
| | MD stretch ratio | | times | 3.3 | 3.3 | 3 | 3 |
| | TD stretching temperature | | °C | 70 | 70 | 70 | 70 |
| | TD stretch ratio | | times | 3.6 | 4.0 | 3.6 | 4.0 |
| | Thermal fixing temperature | | °C | 210 | 210 | 206 | 210 |
| | Relaxation ratio | | % | 5 | 5 | 5 | 5 |
| | Continuous film formation performance | | - | ○ | ○ | ○ | ○ |

(continued)

| Item | | Unit | Example | | | |
|---|---|---|---|---|---|---|
| | | | 1 | 2 | 3 | 4 |
| Property | Thickness, μm | μm | 12 | 20 | 12 | 20 |
| | Intrinsic viscosity of film | | 1.006 | 1.044 | 0.968 | 0.938 |
| | Center average roughness — F face | nm | 0.692 | 0.721 | 0.874 | 0.941 |
| | Center average roughness — B face | nm | 0.731 | 0.755 | 0.885 | 0.983 |
| | X-ray scattered light intensity ratio — 11/12 | | 4.2 | 3.9 | 21 | 1.8 |
| | Thickness precision | Tv% | 11.8 | 10.2 | 12.3 | 12.8 |
| | Haze value | % | 3.5 | 4.3 | 32 | 4.1 |
| | Thichness-direction refractive index | - | 150 | 1.498 | 1.493 | 1.494 |
| | Plane orientation coefficient | - | 0.145 | 0.146 | 0.147 | 0.146 |
| | Impact strength | J/μm | 0.062 | 0085 | 0.068 | 0.055 |
| | Coefficient of thermal shrinkage of MD | % | 1.87 | 157 | 2.43 | 184 |
| | Coefficient of thermal shrinkage of TD | % | 0.75 | 1.97 | 222 | 1.43 |
| | Pinhole resistance | piece | 4 | 6 | 8 | 9 |
| | Bag rupture resistance | number | 100 or more | 100 or more | 100 or more | 100 or more |

Table.2

| Item | | | Unit | Comparative Example | | | Reference Example | |
|---|---|---|---|---|---|---|---|---|
| | | | | 1 | 2 | 3 | 1 | 2 |
| Raw material | PBT resin | Raw resin I.V. | - | 128 | 128 | 1.28 | PBT | Deposition PET manufactured by Toyobo VE100 |
| | | Ratio | mass% | 100 | 100 | 80 | 100 | |
| | Inert particle | Name | - | silica | silica | silica | - | |
| | | Ratio | ppm | 1600 | 1600 | 1600 | - | |
| | Polyester resin other than PBT | Name | - | - | - | PET2 | - | |
| | | Ratio | mass% | - | - | 20 | | |

(continued)

| Item | | Unit | Comparative Example | | | Reference Example | |
|---|---|---|---|---|---|---|---|
| | | | 1 | 2 | 3 | 1 | 2 |
| Formation of the film | Extruding temperature | °C | 265 | 265 | 275 | inflation film forming | |
| | super-multilayer laminate or not | - | No | No | Yes | | |
| | Number of element | piece | - | - | 12 | | |
| | Chill roll temperature | °C | 25 | 0 | 15 | | |
| | Streching order | - | TD-MD | TD-MD | MD-TD | | |
| | stretching temperature | °C | 60 | 60 | 60 | | |
| | MD stretch ratio | times | 3.3 | 3.3 | 3 | | |
| | TD stretching temperature | °C | 70 | 70 | 70 | | |
| | TD stretch ratio | times | 3.5 | 3.5 | 4.0 | | |
| | Thermal fixing temperature | °C | 200 | 200 | 200 | | |
| | Relaxation ratio | % | 5 | 5 | 5 | | |
| | Continuous film formation performance | - | × | Δ | ○ | | |

(continued)

| Item | | | Unit | Comparative Example | | | Reference Example | |
|---|---|---|---|---|---|---|---|---|
| | | | | 1 | 2 | 3 | 1 | 2 |
| Property | Thickness, μm | | μm | | 12 | 12 | 25 | 12 |
| | Intrinsic viscosity of film | | | | 1.002 | 090 | - | 0.58 |
| | Center average roughness | F face | nm | | 1.043 | 1.061 | | |
| | | B face | nm | | 1.121 | 1.135 | | |
| | X-ray scattered light intensity ratio | I1/I2 | | | 0.3 | 21 | - | |
| | Thickness precision | | Tv% | | 18 | 13.1 | 35 | |
| | Haze value | | % | | 3.7 | 3 | 12 | |
| | Thickness-direction refractive index | | - | | 1.549 | 1.493 | - | 1.4935 |
| | Plane orientation coefficient | | - | | 0.141 | 0.146 | - | 0.16 |
| | Impact strength | | J/μm | | 0.066 | 0.053 | 0.031 | 0.042 |
| | Coefficient of thermal shrinkage of MD | | % | | 420 | 1.56 | 0.70 | 1.40 |
| | Coefficient of thermal shrinkage of TD | | % | | 4.60 | 228 | -0.60 | 020 |
| | Pinhole resistance | | piece | | 8 | 13 | 1 | 30 |
| | Bag rupture resistance | | number | | 52 | 38 | 8 | 1 |

Table.3

| Item | | Unit | Example | | | |
|---|---|---|---|---|---|---|
| | | | 1 | 2 | 3 | 4 |
| Barrier property | Barrier layer | - | silica-alumina | silica-alumina | silica-alumina | silica-alumina |
| | Oxygen permeability | cc/m$^2$·day | 1.12 | 1.27 | 1.2 | 1.39 |
| | Water vapor permeability | g/m$^2$·day | 1.0 | 1.0 | 2.1 | 1.37 |

Table.4

| Item | Unit | Comparative Example | | Reference Example | |
|---|---|---|---|---|---|
| | | 2 | 3 | 1 | 2 |
| Barrier layer | - | silica-alumina | silica-alumina | silica-alumina | silica-alumina |

(continued)

| Item | | Unit | Comparative Example | | Reference Example | |
|---|---|---|---|---|---|---|
| | | | 2 | 3 | 1 | 2 |
| Barrier property | Oxygen permeability | cc/m$^2$·day | 2.8 | 2.3 | 2.2 | 1.0 |
| | Water vapor permeability | g/m$^2$·day | 3.1 | 25 | 3.0 | 1.0 |

INDUSTRIAL APPLICABILITY

According to the present invention, a biaxially stretched polybutylene terephthalate film can be manufactured, which has all of excellent thickness precision, excellent pin-hole resistance and excellent bag rupture resistance and can achieve excellent barrier properties when a gas barrier layer is provided thereon. The film can be used widely in the fields of food packaging and medicine packaging, particularly as a packaging material for which pin-hole resistance, bag rupture resistance and gas barrier properties are required, and therefore can be expected to greatly contribute to industrial fields.

**Claims**

1. A biaxially stretched polybutylene terephthalate film, wherein the biaxially stretched polybutylene terephthalate film containing not less than 90% by mass of polybutylene terephthalate, and the plane center average roughness of a 500-nm square region that does not contain a protrusion resulting from inert particles in at least one surface of the film is not more than 1.0 nm.

2. The biaxially stretched polybutylene terephthalate film according to claim 1, wherein the scattered light intensity ratio in a scattering vector-scattered light intensity diagram obtained by measuring wide-angle X-ray diffraction of the film from the Edge direction of the film meets the requirement represented by formula (1):

$$I_1/I_2 > 1.0 \quad (1)$$

wherein $I_1$ represents a scattered light peak intensity in a scattering vector originated from (100) plane of a polybutylene terephthalate crystal structure as observed in the direction parallel with the film thickness direction when an X-ray is incident from the Edge direction of the film; and $I_2$ represents a scattered light peak intensity in a scattering vector originated from (010) plane of a polybutylene terephthalate crystal structure as observed in the direction parallel with the film MD direction when an X-ray is incident from the Edge direction of the film.

3. A gas barrier laminate film comprising the biaxially stretched polybutylene terephthalate film according to claim 1 or 2 and a gas barrier layer laminated on at least one surface of the biaxially stretched polybutylene terephthalate film.

4. The gas barrier laminate film according to claim 3, wherein the gas barrier layer laminated on at least one surface of the biaxially stretched polybutylene terephthalate film is a deposited oxide film.

5. A method for manufacturing the biaxially stretched polybutylene terephthalate film according to claim 1 or 2, comprising biaxially stretching a non-stretched sheet that is produced by laminating not less than 60 layers having the same composition to form a multi-layer laminate and then casting the multi-layer laminate.

6. The method for manufacturing the biaxially stretched polybutylene terephthalate film according to claim 5, wherein the method for stretching the biaxially stretched polybutylene terephthalate film is a sequential biaxial stretching method.

Fig.1

6.87
[nm]

0.00

200.00 nm                    500.00 x 500.00 nm

Fig. 1. AMF image of Example 1 (super-multilayered PBT)

Fig.2

8.09
[nm]

0.00

200.00 nm                    500.00 x 500.00 nm

Fig. 2. AMF image of Comparative Example 2
(single layer PBT)

Fig.3

Fig. 3  A scattering vector-scattered light intensity diagram
of Example 1(super-multilayered PBT)

Fig.4

Fig. 4  A scattering vector-scattered light intensity diagram
of Comparative Example 2 (single layer PBT)

## INTERNATIONAL SEARCH REPORT

| International application No. |
|---|
| PCT/JP2015/064366 |

| A. CLASSIFICATION OF SUBJECT MATTER |
|---|
| C08J5/18(2006.01)i, B32B27/36(2006.01)i |

According to International Patent Classification (IPC) or to both national classification and IPC

| B. FIELDS SEARCHED |
|---|

Minimum documentation searched (classification system followed by classification symbols)
C08J5/18, B32B27/36

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2013-256110 A (Toyobo Co., Ltd.),<br>26 December 2013 (26.12.2013),<br>entire text<br>& WO 2013/172214 A1 | 1–6<br>3–4 |
| Y | JP 2013-256047 A (Kohjin Holdings Co., Ltd.),<br>26 December 2013 (26.12.2013),<br>claims; examples<br>(Family: none) | 3–4 |
| Y | JP 2007-176521 A (Mitsubishi Polyester Film Corp.),<br>12 July 2007 (12.07.2007),<br>claims; examples<br>(Family: none) | 3–4 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 July 2015 (01.07.15) | Date of mailing of the international search report<br>14 July 2015 (14.07.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/064366

C (Continuation).  DOCUMENTS CONSIDERED TO BE RELEVANT

| Category* | Citation of document, with indication, where appropriate, of the relevant passages | Relevant to claim No. |
|---|---|---|
| P,X | WO 2014/077197 A1  (Toyobo Co., Ltd.), 22 May 2014 (22.05.2014), entire text & TW 201420316 A | 1-2,5-6 |
| E,X | WO 2015/072163 A1  (Toyobo Co., Ltd.), 21 May 2015 (21.05.2015), entire text (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013256573 A
- JP 2013256047 A
- JP 2014015233 A
- JP 2014105703 A